# EUROPÄISCHE PATENTSCHRIFT

(11) **EP 3 617 045 B1**
(45) Veröffentlichungstag und Bekanntmachung des Hinweises auf die Patenterteilung: **05.10.2022**
(21) Anmeldenummer: 19193044.5
(22) Anmeldetag: 22.08.2019
(51) Int. Cl.: B62D 33/06, B62D 33/02, B62D 65/04, B62D 65/02, B62D 33/077

(54) **KRAFTFAHRZEUG MIT EINER FAHRERHAUSTRAGVORRICHTUNG**
MOTOR VEHICLE WITH A DRIVERS CAB TRAILER DEVICE
VÉHICULE AUTOMOBILE DOTÉ D'UN DISPOSITIF SUPPORT DE CABINE DE CONDUCTEUR

(30) Priorität: 30.08.2018 DE 102018121209
(43) Veröffentlichungstag der Anmeldung: 04.03.2020
(73) Patentinhaber: MAN Truck & Bus SE, 80995 München (DE)
(72) Erfinder: Rohrmüller, Hans, 82216 Maisach (DE); Kondic, Darko, 85757 Karlsfeld (DE); Burger, Norbert, 84030 Ergolding (DE); Möller, Andreas, 36145 Hofbieber (DE); Kusch, Willi, 88239 Wangen im Allgäu (DE)
(74) Vertreter: v. Bezold & Partner Patentanwälte - PartG mbB

(56) Entgegenhaltungen:
- EP-A1- 1 380 496
- DE-A1- 10 017 858
- US-A- 5 156 230
- US-A1- 2004 119 276
- US-A1- 2010 263 954

## Beschreibung

Die Erfindung betrifft ein Kraftfahrzeug mit einer Fahrerhaustragvorrichtung.

Nutzfahrzeuge, wie Lastkraftwagen, können ein Fahrerhaus bzw. eine Fahrerkabine aufweisen. Typischerweise ist das Fahrerhaus federnd auf einem Hauptrahmen des Nutzfahrzeugs gelagert. Unterhalb des Fahrerhauses ist eine Verbrennungskraftmaschine angeordnet. Das Fahrerhaus und somit eine Sitzposition des Fahrers ist somit vergleichsweise hoch. Es ist möglich, dass das Fahrerhaus kippbar am Hauptrahmen angebracht ist, um einen Zugang zu der Verbrennungskraftmaschine zu ermöglichen.

Herkömmliche Fahrerhauslagerungen sind bspw. aus der EP 0 768 231 A1 und der EP 0 355 345 A2 bekannt.

Die US 2004/119276 A1 betrifft ein Fahrgestell für ein vierrädriges Straßenfahrzeug mit einer ebenen Plattform, die aus einer Sandwichstruktur besteht, einem vorderen rohrförmigen Rahmen, einem hinteren rohrförmigen Rahmen und vier linearen Dämpfern, die starr und ortsfest an den Rahmen befestigt sind.

Die US 2010/263954 A1 offenbart eine selbsttragende Monocoque-Karosserie mit einer Grundrahmenstruktur. Die Karosseriebaugruppe umfasst auch ein Paar Radachsen-Schnittstellen, die sich im Allgemeinen an vorderen und hinteren Stellen der Grundrahmenstruktur befinden, um ein Paar Radachsen aufzunehmen. Die Karosseriebaugruppe verfügt auch über ein Fach für Energiespeicherelemente, das zwischen den Schnittstellen der Vorder- und Hinterradachsen angeordnet ist. Die Karosseriebaugruppe umfasst auch einen Motorraum zur vollständigen Unterbringung eines Motorsystems. Die Karosseriebaugruppe umfasst auch eine Schnittstelle zum Fahrzeugaußenrahmen. Die Karosseriebaugruppe umfasst auch Schnittstellen für vordere und hintere Querlenker zur Verbindung mit zwei Paaren symmetrischer vorderer und hinterer Querlenker, die sich über eine Länge der Grundrahmenstruktur erstrecken. Die Unterseite der Grundrahmenstruktur ist auf oder unterhalb einer horizontalen Ebene zwischen den Radachsen angeordnet.

Die EP 1 380 496 A1 offenbart ein Fahrzeugcockpit umfassend ein Dach, eine Fußplatte, mindestens einen Sitz, eine Vorderseite, eine Rückwand, eine Sitzlehne und zwei mit Öffnungen versehene Seitenwände zur Aufnahme der Türen. Das Cockpit ist aus einem einzigen Teil aus polymerem thermoplastischem Material hergestellt, das somit eine hohe Gleichmäßigkeit ohne strukturelle Schwächezone aufweist. Eine dem Cockpit zugeordnete Tragstruktur verleiht dem Fahrzeug den erforderlichen mechanischen Widerstand und weist eine netzartige Konfiguration auf, die aus einer Vielzahl von Formelementen besteht, die sich entlang von Längsebenen erstrecken und mit denen transversale Versteifungselemente verbunden sind. Der Rahmen, an dem die Tragstruktur befestigt ist, umfasst einen hinteren Teil und einen vorderen Teil, der in Bezug auf den hinteren Teil nach unten gebogen ist, um die Tragstruktur aufzunehmen.

Der Erfindung liegt die Aufgabe zu Grunde, eine alternative und/oder verbesserte Tragkonstruktion für ein Kraftfahrzeug zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Die Erfindung betrifft ein Kraftfahrzeug, vorzugsweise ein Nutzfahrzeug, vorzugsweise Lastkraftwagen oder Omnibus. Das Kraftfahrzeug weist ein Fahrerhaus (z. B. Lastkraftwagen-Fahrerhauskabine) und einen Hauptrahmen (z. B. Leiterrahmen) auf. Das Kraftfahrzeug weist eine starre Fahrerhaustragvorrichtung auf. Die starre Fahrerhaustragvorrichtung trägt das Fahrerhaus starr an einer Rückseite des Fahrerhauses (z. B. eine Rückseite einer Rückwandstruktur des Fahrerhauses und/oder eine Rückseite einer Bodenstruktur des Fahrerhauses). Die starre Fahrerhaustragvorrichtung ist starr von dem Hauptrahmen getragen.

Die rückseitige, starre Fahrerhaustragvorrichtung sowie der Verzicht auf eine federnde Lagerung des Fahrerhauses am Hauptrahmen ermöglichen eine niedrige, bodennahe Anordnung des Fahrerhauses. Dies kann insbesondere vorteilhaft bei Nutzfahrzeugen, die einer hohen Ein- und Ausstiegshäufigkeit unterliegen, sein, um die körperliche Belastung beim Ein- und Aussteigen für die Fahrzeugbesatzung zu minimieren. Darüber hinaus gewährleistet eine niedrige Anordnung des Fahrerhauses und eine damit einhergehende niedrige Sitzposition des Fahrzeugführers eine optimierte direkte Sicht auf die Fahrzeugumgebung und auf andere Verkehrsteilnehmer.

Zweckmäßig kann das Kraftfahrzeug auch ohne frontseitige und/oder unter dem Fahrerhaus angeordnete Antriebseinrichtung, insbesondere Verbrennungskraftmaschine, ausgebildet sein.

Es ist möglich, dass das Fahrerhaus selbsttragend ist, zum Beispiel durch eine Gitterrahmenkonstruktion und/oder eine Blechkonstruktion.

Beispielsweise kann der Hauptrahmen bezüglich einer Vorwärtsfahrtrichtung des Kraftfahrzeugs hinter dem Fahrerhaus (z. B. vollständig) angeordnet sein.

Es ist möglich, dass die Rückseite des Fahrerhauses entgegengesetzt zu einer Vorwärtsfahrtrichtung des Kraftfahrzeugs gerichtet ist.

In einem Ausführungsbeispiel weist die starre Fahrerhaustragvorrichtung mindestens eine Anlagefläche auf, die zu einer Horizontalachse und zu einer Vertikalachse geneigt ist und flächig an der Rückseite des Fahrerhauses anliegt. Die geneigte Anlagefläche kann eine Montage und Positionierung des Fahrerhauses an der Fahrerhaustragvorrichtung erleichtern.

In einem weiteren Ausführungsbeispiel ist die Rückseite des Fahrerhauses (z. B. eine Rückseite einer Rückwandstruktur des Fahrerhauses) mit einer Stufe ausgebildet, die bezüglich einer Vertikalrichtung und bezüglich einer Horizontalrichtung, vorzugsweise flächig, an der starren Fahrerhaustragvorrichtung anliegt. Alternativ oder zusätzlich kann die starre Fahrerhaustragvorrichtung mit einer Stufe ausgebildet sein, die bezüglich einer Vertikalrichtung und bezüglich einer Horizontalrichtung, vorzugsweise flächig, an der Rückseite des Fahrerhauses anliegt. Die Stufen können zweckmäßig einander angepasst sein. Die Stufen können eine Positionierung des Fahrerhauses zur Fahrerhaustragvorrichtung bei der Montage erleichtern.

In einer Weiterbildung kann eine sich in Vertikalrichtung erstreckende Stufenfläche der Stufe des Fahrerhauses und/oder der Fahrerhaustragvorrichtung geneigt zu einer Vertikalachse sein.

In einem weiteren Ausführungsbeispiel weist eines von der starren Fahrerhaustragvorrichtung und dem Fahrerhaus ein Zentrierelement und das andere von der starren Fahrerhaustragvorrichtung und dem Fahrerhaus eine Zentrierelementaufnahme für das Zentrierelement auf. Beispielsweise kann das Zentrierelement eine Ausrichtung des Fahrerhauses zur Fahrerhaustragvorrichtung in unterschiedlichen Richtungen während der Montage ermöglichen.

In einer Weiterbildung ist das Zentrierelement konisch und/oder als ein Zentrierdorn ausgebildet. Alternativ oder zusätzlich ist die Zentrierelementaufnahme als ein Loch, vorzugsweise ein Durchgangsloch ausgebildet. Das Zentrierelement kann somit eine allmähliche Ausrichtung zum Beispiel während eines Absetzens des Fahrerhauses auf der Fahrerhaustragvorrichtung ermöglichen.

In einer Weiterbildung ist das Zentrierelement in einer Vertikalrichtung ausgerichtet und/oder das Zentrierelement und die Zentrierelementaufnahme richten das Fahrerhaus und die starre Fahrerhaustragvorrichtung in einer Längsrichtung des Kraftfahrzeugs und/oder in einer Querrichtung des Kraftfahrzeugs zueinander ausrichten.

10 In der erfindungsgemässen Ausführung sind die starre Fahrerhaustragvorrichtung und das Fahrerhaus (z. B. die Rückseite des Fahrerhauses) so ausgebildet, dass das Fahrerhaus und die starre Fahrerhaustragvorrichtung bereits durch eine Zentrierung (z. B. durch das Zentrierelement) und mehrere flächige Kontakte zwischen der starren Fahrerhaustragvorrichtung und dem Fahrerhaus bezüglich zweier translatorischer Freiheitsgrade (zum Beispiel Translation entlang einer Querachse und einer Längsachse des Kraftfahrzeugs) und bezüglich aller drei rotatorischen Freiheitsgrade zueinander festgelegt sind. Das Fahrerhaus kann somit mit einer hohen Genauigkeit bezüglich der Fahrerhaustragvorrichtung positioniert und montiert werden. Die so gewählten Anbindungspunkte zwischen dem Fahrerhaus und der Fahrerhaustragvorrichtung ermöglichen die Realisierung eines sogenannten Referenzpunktsystems zur Gewährleistung besonders geringer Toleranzen bei der Montage.

Zweckmäßig kann das Fahrerhaus an der Fahrerhaustragvorrichtung bezüglich des dritten translatorischen Freiheitsgrads (zum Beispiel Translation entlang einer Hochachse des Kraftfahrzeugs) mittel lösbarer Befestigungselemente festgelegt sein.

In einer weiteren Ausführungsform ist die starre Fahrerhaustragvorrichtung als eine Tragkonsolenvorrichtung ausgebildet.

In einer weiteren Ausführungsform ist die starre Fahrerhaustragvorrichtung mehrteilig, vorzugsweise dreiteilig.

In einer Ausführungsvariante ist die starre Fahrerhaustragvorrichtung über mehrere lösbare Befestigungselemente an dem Fahrerhaus befestigt, die so angeordnet sind, dass mehr als die Hälfte, vorzugsweise mehr als 70 % der lösbaren Befestigungselemente von außerhalb des Fahrerhauses zugängig sind (z. B. zum Lösen und Anziehen). Das Fahrerhaus kann somit bereits sicher an der Fahrerhaustragvorrichtung befestigt werden, ohne dass das Fahrerhaus betreten werden muss.

In einer weiteren Ausführungsvariante begrenzt das Fahrerhaus das Kraftfahrzeug nach unten hin. Das Fahrerhaus kann beispielsweise einen Bodenabstand von weniger als 50 cm, vorzugsweise weniger als 40 cm, aufweisen.

In einer weiteren Ausführungsvariante ist ein (erstes) Tragbauteil der starren Fahrerhaustragvorrichtung (z. B. direkt) an einem fahrerseitigen Rückseitenbereich der Rückseite des Fahrerhauses befestigt.

In einer weiteren Ausführungsform ist ein (zweites) Tragbauteil der starren Fahrerhaustragvorrichtung (z. B. direkt) an einem beifahrerseitigen Rückseitenbereich der Rückseite des Fahrerhauses befestigt.

In einer weiteren Ausführungsform ist ein (drittes) Tragbauteil der starren Fahrerhaustragvorrichtung (z. B. direkt) an einer Rückseite einer Bodenstruktur des Fahrerhauses befestigt.

In einer weiteren Ausführungsform ist das erste Tragbauteil (z. B. direkt) an einem ersten Längsträger des Hauptrahmens befestigt, das zweite Tragbauteil (z. B. direkt) an einem zweiten Längsträger des Hauptrahmens befestigt und/oder das dritte Tragbauteil zwischen dem ersten Tragbauteil und dem zweiten Tragbauteil angeordnet.

In einem Ausführungsbeispiel ist das dritte Tragbauteil als eine Querträgerkonstruktion ausgeführt und/oder das dritte Tragbauteil ist von dem ersten Tragbauteil und dem zweiten Tragbauteil getragen.

In einem weiteren Ausführungsbeispiel ist das erste Tragbauteil, das zweite Tragbauteil und/oder das dritte Tragbauteil als eine Tragkonsole ausgebildet.

In einer Ausführungsvariante weist das erste Tragbauteil eine horizontale Anlagefläche in flächiger Anlage mit dem Fahrerhaus (z. B. einer Stufenfläche des Fahrerhauses), eine zu einer Horizontalachse und zu einer Vertikalachse geneigte Anlagefläche in flächiger Anlage mit dem Fahrerhaus (z. B. der Rückseite des Fahrerhauses) und/oder eine vertikale Anlagefläche in flächiger Anlage mit dem Fahrerhaus (z. B. der Rückseite des Fahrerhauses) auf.

In einer weiteren Ausführungsvariante weist das zweite Tragbauteil eine horizontale Anlagefläche in flächiger Anlage mit dem Fahrerhaus(z. B. einer Stufenfläche des Fahrerhauses), eine zu einer Horizontalachse und zu einer Vertikalachse geneigte Anlagefläche in flächiger Anlage mit dem Fahrerhaus (z. B. der Rückseite des Fahrerhauses) und/oder eine vertikale Anlagefläche in flächiger Anlage mit dem Fahrerhaus (z. B. der Rückseite des Fahrerhauses) auf.

Zweckmäßig kann die Stufe der Fahrerhaustragvorrichtung zumindest teilweise durch die horizontale Anlagefläche und die geneigte Anlagefläche des ersten Tragbauteil und/oder des zweiten Tragbauteil gebildet sein.

In einer weiteren Ausführungsvariante weist das dritte Tragbauteil eine vertikale Anlagefläche in flächiger Anlage mit dem Fahrerhaus (z. B. der Rückseite des Fahrerhauses, z. B. einer Rückseite einer Bodenstruktur des Fahrerhauses) auf.

Es ist möglich, dass die horizontale Anlagefläche des ersten Tragbauteils und/oder des zweiten Tragbauteils mehrere Befestigungselementaufnahmen (zum Beispiel Durchgangslöcher) für lösbare Befestigungselemente (zum Beispiel Schrauben) zum Befestigen an dem Fahrerhaus aufweisen, wobei vorzugsweise die mehreren Befestigungselementaufnahmen so angeordnet sind, dass die jeweiligen Befestigungselemente von außerhalb des Fahrerhauses zugängig sind (z. B. zum Lösen und Anziehen).

Es ist auch möglich, dass die vertikale Anlagefläche des ersten Tragbauteils, des zweiten Tragbauteils und/oder des dritten Tragbauteils, und/oder die geneigte Anlagefläche des zweiten Tragbauteils mehrere Befestigungselementaufnahmen (zum Beispiel Durchgangslöcher) für lösbare Befestigungselemente (zum Beispiel Schrauben) zum Befestigen an dem Fahrerhaus aufweisen, wobei vorzugsweise die mehreren Befestigungselementaufnahmen so angeordnet sind, dass die jeweiligen Befestigungselemente von außerhalb des Fahrerhauses zugängig sind (z. B. zum Lösen und Anziehen).

Es ist ferner möglich, dass (zum Beispiel nur) die geneigte Anlagefläche des ersten Tragbauteils mehrere Befestigungselementaufnahmen (zum Beispiel Durchgangslöcher) für lösbare Befestigungselemente (zum Beispiel Schrauben) zum Befestigen an dem Fahrerhaus aufweisen, wobei vorzugsweise die mehreren Befestigungselementaufnahmen so angeordnet sind, dass die jeweiligen Befestigungselemente nur innerhalb des Fahrerhauses zugängig sind (z. B. zum Lösen und Anziehen).

In einem Ausführungsbeispiel weist das erste Tragbauteil oder das zweite Tragbauteil ein, vorzugsweise konisches, Zentrierelement, vorzugsweise einen Zentrierdorn, zum Ausrichten des Fahrerhauses auf. Vorzugsweise erstreckt sich das Zentrierelement ausgehend von der horizontalen Anlagefläche des ersten Tragbauteils oder des zweiten Tragbauteils in einer Vertikalrichtung nach oben.

In einem weiteren Ausführungsbeispiel weist die zur Horizontalachse und zur Vertikalachse geneigte Anlagefläche des ersten Tragbauteils eine, vorzugsweise rechteckförmige, Durchgangsöffnung zum Bereitstellen eines rückseitigen Verschieberaums für einen (z. B. längs-) verschiebbaren Fahrersitz des Fahrerhauses auf. Zweckmäßig kann so der Fahrersitz oder eine daran montierte Komponente zumindest teilweise in die Durchgangsöffnung eintauchen, z. B. wenn der Fahrersitz ganz nach hinten verstellt wird, sodass der mögliche Verschiebeweg des Fahrersitzes verlängert wird.

In einem weiteren Ausführungsbeispiel weist die zur Horizontalachse und zur Vertikalachse geneigte Anlagefläche des zweiten Tragbauteils eine Durchgangsöffnung zur Gewichtseinsparung auf.

Die Erfindung betrifft auch ein Verfahren zur Montage eines Kraftfahrzeugs wie hierin offenbart. Das Verfahren weist das Vormontieren des Fahrerhauses und das Montieren der starren Fahrerhaustragvorrichtung am Hauptrahmen auf. Das Verfahren weist ferner das Absenken des vormontierten Fahrerhauses auf die am Hauptrahmen montierte, starre Fahrerhaustragvorrichtung auf.

In einer Weiterbildung erfolgt beim Absenken eine sukzessive Ausrichtung des Fahrerhauses zur Fahrerhaustragvorrichtung in einer Längsrichtung des Kraftfahrzeugs und in einer Querrichtung des Kraftfahrzeugs mittels des Zentrierelements, während das Fahrerhaus an der zur Horizontalachse und zur Vertikalachse geneigten Anlagefläche des ersten Tragbauteils und/oder an der zur Horizontalachse und zur Vertikalachse geneigten Anlagefläche des zweiten Tragbauteils entlanggleitet (z.B. nach unten). Das Fahrerhaus und die Fahrerhaustragvorrichtung können so auf besonders vorteilhafte Weise genau zueinander ausgerichtet und positioniert werden, um anschließend mittels lösbarer Befestigungselemente aneinander fixiert zu werden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht einer Fahrerhaustragvorrichtung und eines Abschnitts eines Hauptrahmens gemäß der vorliegenden Offenbarung;
- Figur 2: eine Seitenansicht der Fahrerhaustragvorrichtung und eines Abschnitts des Hauptrahmens; und
- Figur 3: eine perspektivische Ansicht eines Ausschnitts eines Fahrerhauses gemäß der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

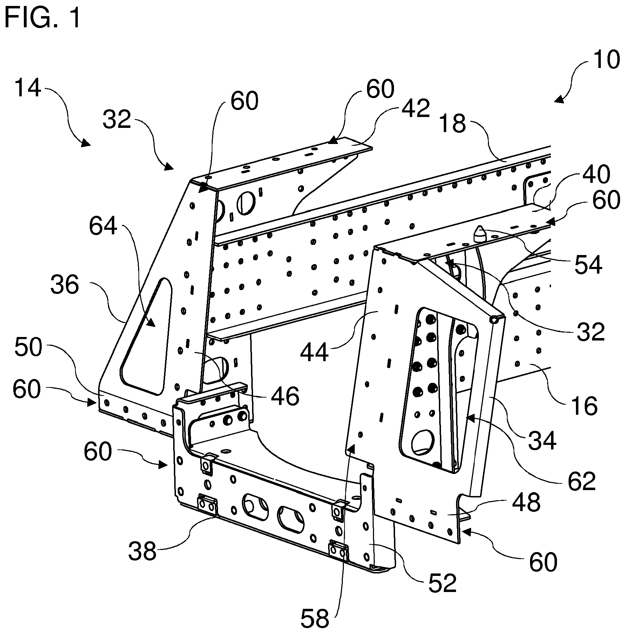

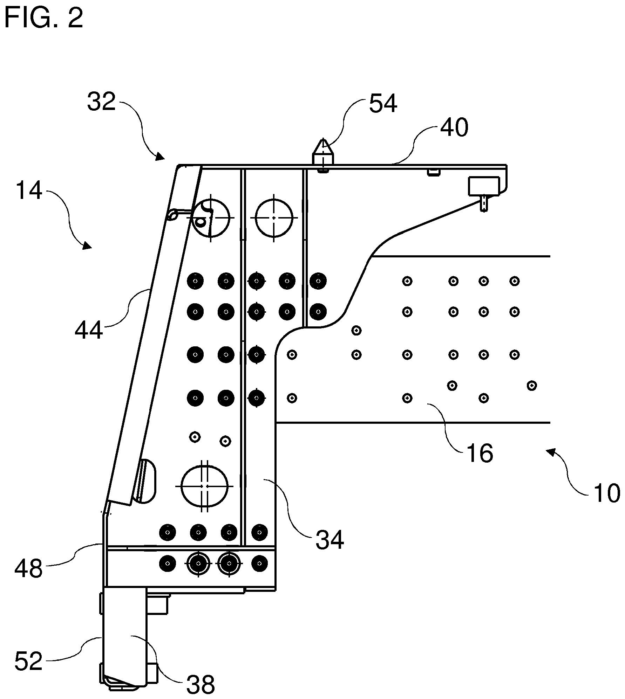

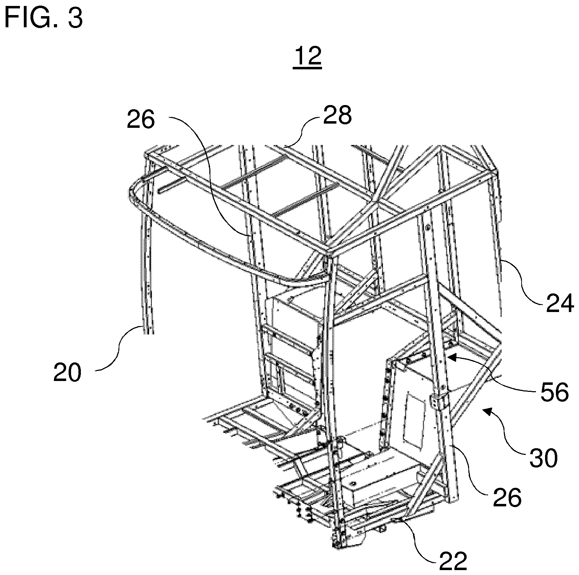

Die Figuren 1 bis 3 zeigen einen Hauptrahmen 10 (siehe Figuren 1 und 2), ein Fahrerhaus 12 (siehe Figur 3) und eine Fahrerhaustragvorrichtung 14 (siehe Figuren 1 und 2) für ein Kraftfahrzeug (nicht in weiterem Detail dargestellt), vorzugsweise ein Nutzfahrzeug. Das Kraftfahrzeug kann insbesondere als ein Lastkraftwagen ausgebildet sein. Die hierin beschrieben Techniken können allerdings auch für andere Kraftfahrzeuge anwendbar sein.

In der dargestellten Ausführungsform ist der Hauptrahmen 10 als ein Leiterrahmen ausgebildet, allerdings sind auch andere Typen von Hauptrahmen möglich. Der Hauptrahmen 10 kann einen ersten Hauptlängsträger 16 und einen zweiten Hauptlängsträger 18 aufweisen. Die Hauptlängsträger 16 und 18 verlaufen parallel beabstandet zueinander. Die Hauptlängsträger 16 und 18 können durch mehrere Querträger (nicht dargestellt) miteinander verbunden sein.

Das Fahrerhaus 12 kann eine Vorderwandstruktur 20 (nur abschnittsweise dargestellt), eine Bodenstruktur 22, eine Rückwandstruktur 24 (nur abschnittsweise dargestellt) sowie Seitenwandstrukturen 26 und/oder eine Dachstruktur 28 aufweisen. Die Vorderwandstruktur 20 bildet eine Vorderseite des Fahrerhauses 12. Die Bodenstruktur 22 bildet eine Unterseite oder Bodenseite des Fahrerhauses 12. Die Rückwandstruktur 24 bildet eine Rückseite des Fahrerhauses 12. Die Seitenwandstrukturen 26 bilden die sich in Längsrichtung des Kraftfahrzeugs erstreckenden Seiten des Fahrerhauses 12. Die Dachstruktur 28 bildet eine Oberseite des Fahrerhauses 12.

Das Fahrerhaus 12 ist als selbsttragendes Fahrerhaus konzipiert. Vorzugsweise ist das Fahrerhaus 12, vorzugsweise die Vorderwandstruktur 20, die Bodenstruktur 22, die Rückwandstruktur 24, die Seitenwandstrukturen 26 und/oder die Dachstruktur 28, aus einer Gitterrahmenkonstruktion gebildet, wie dargestellt ist. Die Gitterrahmenkonstruktion kann eine Mehrzahl von offenen und/oder geschlossenen Profilen aufweisen, die in Knotenpunkt fest miteinander verbunden, d. h. gefügt, sind, zum Beispiel mittels Verschweißen, Verkleben, Verschrauben, Verformen usw.. Es ist auch möglich, dass die Fahrerhaustragstruktur oder einzelne Strukturelemente davon alternativ oder zusätzlich als eine Blechkonstruktion ausgebildet ist, zum Beispiel mit Blechpressteilen.

In der gezeigten, beispielhaften Ausführungsform ist das Fahrerhaus 12 für ein Nutzfahrzeug ohne frontseitige Verbrennungskraftmaschine ausgebildet, die herkömmlich unter dem Fahrerhaus 12 angeordnet wäre. Stattdessen ist das Fahrerhaus 12 im montierten Zustand bodennah mit einem Bodenabstand von beispielsweise weniger als 50 cm, insbesondere weniger als 40 cm, z. B. rund 35 cm angeordnet. Das Fahrerhaus 12, vorzugsweise die Bodenstruktur 22, grenzt das Nutzfahrzeug zum Boden hin ab. Mit anderen Worten gesagt, unterhalb des Fahrerhauses 12 und insbesondere der Bodenstruktur 22 sind keine tragenden Teile eines Fahrzeugrahmens angeordnet. Ferner ist unterhalb des Fahrerhauses 12 beispielsweise keine Antriebseinrichtung, wie eine Verbrennungskraftmaschine, angeordnet. Die Antriebseinrichtung des Nutzfahrzeugs, die beispielsweise eine Elektro-Antriebseinrichtung sein kann, ist stattdessen an einer anderen Position des Nutzfahrzeugs angeordnet.

Damit sitzt das Fahrerhaus 12 nicht, wie üblich, oberhalb eines Fahrzeugrahmens angeordnet und sitzt vollständig auf einem Fahrzeugrahmen auf, und ist auch nicht federnd auf dem Fahrzeugrahmen gelagert. Stattdessen ist das Fahrerhaus 12 rückseitig starr über die Fahrerhaustragvorrichtung 14 an dem (Fahrzeug-) Hauptrahmen 10 gelagert.

Vorzugsweise ist das Fahrerhaus 12 über eine Stufe 30 in der Rückwandstruktur 24, die mit einer Stufe 32 der Fahrerhaustragvorrichtung 14 zusammenpasst, an der Fahrerhaustragvorrichtung 14 befestigt. Die Stufen 30, 32 sind so aneinander angepasst, dass sie im montierten Zustand flächig aneinander anliegen, sowohl bezüglich einer Vertikalrichtung als auch bezüglich einer Horizontalrichtung (Längsrichtung des Kraftfahrzeugs). Wie hierin im Detail erklärt ist, kann eine Besonderheit der Stufen 30, 32 darin bestehen, dass sich die in Vertikalrichtung erstreckende Stufenflächen der Stufen 30, 32 geneigt zur Vertikalrichtung erstreckt. Die rückseitige, starre Anbindung ermöglicht die hinsichtlich eines Einstiegs optimierte, bodennahe Anordnung des Fahrerhauses 12.

Die Fahrerhaustragvorrichtung 14 ist starr, das heißt insbesondere nicht-federnd, ausgebildet. Die Fahrerhaustragvorrichtung 14 trägt das Fahrerhaus 12 am Hauptrahmen 10. Die Fahrerhaustragvorrichtung 14 ist als eine Fahrerhaustragkonsolenvorrichtung 14 ausgebildet. Vorzugsweise kann die Fahrerhaustragvorrichtung 14 mehrteilig, zum Beispiel dreiteilig, ausgebildet sein, zum Beispiel aus mehreren Fahrerhaustragkonsolen, wie dargestellt ist.

Im gezeigten Ausführungsbeispiel weist die Fahrerhaustragvorrichtung 14 ein erstes Tragbauteil 34, ein zweites Tragbauteil 36 und ein drittes Tragbauteil 38 auf. Die Tragbauteile 34, 36 und 38 sind als Tragkonsolen ausgebildet.

Das erste Tragbauteil 34 kann direkt an einem fahrerseitigen Rückseitenbereich der Rückwandstruktur 24 befestigt werden. Das erste Tragbauteil 34 kann direkt, vorzugsweise außenseitig, an dem ersten Hauptlängsträger 16 befestigt sein.

Das zweite Tragbauteil 36 kann direkt an einem beifahrerseitigen Rückseitenbereich der Rückwandstruktur 24 befestigt werden. Das zweite Tragbauteil 34 kann direkt, vorzugsweise außenseitig, an dem zweiten Hauptlängsträger 18 befestigt sein.

Das dritte Tragbauteil 38 kann direkt an einem mittleren Rückseitenbereich der Bodenstruktur 22 befestigt werden. Das dritte Tragbauteil 38 ist zwischen dem ersten Tragbauteil 34 und dem zweiten Tragbauteil 36 angeordnet und von diesen getragen. Das dritte Tragbauteil 38 bildet eine Querträgerkonstruktion der Fahrerhaustragvorrichtung 14.

Das erste Tragbauteil 34 und das zweite Tragbauteil 36 können jeweils eine horizontale Anlagefläche 40, 42, eine geneigte Anlagefläche 44, 46, und, insbesondere optional, eine vertikale Anlagefläche 48, 50 zur flächigen Anlage an die Rückseite der Rückwandstruktur 24 des Fahrerhaus 12 aufweisen. Es grenzen jeweils die Anlageflächen 40 und 44, 42 und 46, 44 und 48 sowie 46 und 50 aneinander. Die Anlageflächen 40-50 bilden die Stufe 32. Im Einzelnen bilden die horizontalen Anlageflächen 40, 42 eine horizontale Stufenfläche der Stufe 32. Die Anlageflächen 44, 46, 48 und 50 bilden eine annähernd vertikale Stufenfläche der Stufe 32. Das dritte Tragbauteil 38 weist eine vertikale Anlagefläche 52 in flächiger Anlage mit der Rückseite der Bodenstruktur 22 auf. Die Anlageflächen 44-52 sind in einer Richtung zu einer Rückseite des Fahrerhauses 12 gerichtet.

Das erste Tragbauteil 34 weist ferner ein Zentrierelement 54 auf. Vorzugsweise kann das Zentrierelement 54 als ein Zentrierdorn ausgeführt sein, wie dargestellt ist. Das Zentrierelement 54 erstreckt sich in einer Vertikalrichtung nach oben ausgehend von der horizontalen Anlagefläche 40. Das Zentrierelement 54 kann mit einer Zentrierelementaufnahme 56 (verdeckt in Figur 3) zusammenwirken, um das Fahrerhaus 12 bei der Montage auszurichten. Die Zentrierelementaufnahme 56 kann beispielsweise als ein Loch, zum Beispiel ein eng toleriertes Durchgangsloch, ausgebildet sein. Vorzugsweise kann das Fahrerhaus 12 bei der Montage durch das Zentrierelement 54 in einer Längsrichtung des Kraftfahrzeugs und in einer Querrichtung des Kraftfahrzeugs ausgerichtet werden.

Das Zentrierelement 54 und die Anlageflächen 40-52 sind so ausgebildet und angeordnet, dass das Fahrerhaus 12 bei der Montage durch diese bereits bezüglich zweier translatorischer Freiheitsgrade (zum Beispiel Translation entlang der Längsachse und Querachse des Kraftfahrzeugs) und bezüglich aller drei rotatorischen Freiheitsgrade (Rotation um die Längsachse, Querachse und Hochachse des Kraftfahrzeugs) an der Fahrerhaustragvorrichtung festgelegt ist. Der übrige translatorisch Freiheitsgrad (zum Beispiel Translation entlang der Hochachse des Kraftfahrzeugs) kann dann durch Anziehen von lösbaren Befestigungselementen zwischen dem Fahrerhaus 12 und der Fahrerhaustragvorrichtung 14 beschränkt sein.

Beispielsweise kann in einem Verfahren zur Montage des Kraftfahrzeugs zunächst das Fahrerhaus 12 vormontiert und dabei bspw. ein Großteil der An- und Einbauten im und am Fahrerhaus 12 angebaut werden. Die Fahrerhaustragvorrichtung 14 wird zunächst am Hauptrahmen 10 befestigt. Der Hauptrahmen 10 und die Fahrerhaustragvorrichtung 14 können mit weiteren Komponenten ausgestattet werden. Der Grund für die Ausstattung bereits zu diesem Montagezeitpunkt kann in der verbesserten Zugänglichkeit zu den Baugruppen und dem verbesserten Handling der Komponenten im Montageprozess liegen.

Das vormontierte Fahrerhaus 12 kann nun von oben auf die Fahrerhaustragvorrichtung 14 abgesenkt werden. Hierbei greift das Zentrierelement 54 in die Zentrieraufnahme 56 ein und richtet das Fahrerhaus 12 zur Fahrerhaustragvorrichtung 14 in einer Längsrichtung unter einer Querrichtung des Kraftfahrzeugs beim weiteren Absenken sukzessive aus. Gleichzeitig legt sich die Rückwandstruktur 24 des Fahrerhauses 12 an die geneigten Flächen 44, 46 an und gleitet an diesen hinab. Das Fahrerhaus 12 wird schließlich vollständig abgesetzt, sodass es flächig an den Anlageflächen 40-52 anliegt. Das Fahrerhaus 12 ist nun bereits bezüglich einer Translation entlang der Längsachse und der Querachse des Kraftfahrzeugs durch das Zentrierelement 54 an der Fahrerhaustragvorrichtung 14 festgelegt. Zusätzlich ist das Fahrerhaus 12 durch Zusammenwirken der flächigen Anlagen der Anlageflächen 40-52 und der Zentrierung durch das Zentrierelement 54 bezüglich einer Rotation um die Längsachse, einer Rotation um die Querachse und einer Rotation um die Hochachse an der Fahrerhaustragvorrichtung 14 festgelegt. Nun können die lösbare Befestigungselemente eingesetzt und angezogen werden, um das Fahrerhaus 12 bezüglich einer Translation entlang der Hochachse des Kraftfahrzeugs an der Fahrerhaustragvorrichtung 14 festzulegen. Die durch das Zentrierelement 54, die Anlageflächen 40-52 und die lösbaren Befestigungselemente gebildeten Anbindungspunkte zwischen dem Fahrerhaus 12 und der Fahrerhaustragvorrichtung 14 bilden somit ein sogenanntes Referenzpunkt System (auch RPS genannt), was eine zuverlässige Montage innerhalb enger Toleranzen ermöglicht.

Die Befestigung der Tragbauteile 34, 36 und/oder 38 aneinander, an dem Fahrerhaus 12 und/oder dem Hauptrahmen 10 kann vorzugsweise mittels lösbare Befestigungselemente, zum Beispiel mittels Schrauben, ausgeführt sein. Die Tragbauteile 34, 36 und 38 können jeweils mehrere Befestigungselementaufnahmen 58 und 60, zum Beispiel Durchgangslöcher, für die lösbare Befestigungselemente aufweisen. Vorzugsweise sind die lösbare Befestigungselemente und die Befestigungselementaufnahmen 58, 60 zur Befestigung der Fahrerhaustragvorrichtung 14 an dem Fahrerhaus 12 so angeordnet, dass mehr als die Hälfte, vorzugsweise mehr als 70 % der lösbaren Befestigungselemente von außerhalb des Fahrerhauses 12 zugängig sind. Die lösbaren Befestigungselemente können so von außerhalb des Fahrerhauses 12 angezogen werden, was die Montage des insbesondere bereits vormontierten und ausgestatteten Fahrerhauses 12 an der Fahrerhaustragvorrichtung 14 erleichtert. Das Fahrerhaus 12 kann somit an der Fahrerhaustragvorrichtung 14 befestigt werden, ohne dass das Fahrerhaus 12 von einem Monteur betreten werden muss.

Beispielsweise kann lediglich die in Vertikalrichtung angeordnete Reihe der Befestigungselementaufnahmen 58 ein Anziehen der jeweiligen lösbaren Befestigungselemente von innerhalb des Fahrerhauses 12 erfordern. Die übrigen Befestigungselementaufnahmen 60 können von außerhalb des Fahrerhauses 12 angezogen werden. In anderen Worten, die Befestigungselementaufnahmen 58 der geneigten Anlagefläche 44 erfordern ein Festziehen der jeweiligen Befestigungselemente innerhalb des Fahrerhauses 12. Die Befestigungselementaufnahmen 60 der Anlageflächen 40, 42, 46, 48 und/oder 50 ermöglichen ein Festziehen der jeweiligen Befestigungselemente außerhalb des Fahrerhauses 12.

Die Befestigung des Fahrerhauses 12 über die Fahrerhaustragvorrichtung 14 an dem Hauptrahmen 10 ermöglicht eine Kraftübertragung in allen Hauptrichtungen von dem Fahrerhaus 12 in den Hauptrahmen 10. Da über die Bodenstruktur 22 bei einem Frontalcrash ein Großteil der Crashenergie übertragen werden kann, kann die Bodenstruktur 22 zusätzlich durch das dritte Tragbauteil 38 abgestützt sein.

Wie ferner in Figur 1 dargestellt ist, kann die geneigte Anlagefläche 44 des ersten Tragbauteils 34 eine, vorzugsweise rechteckförmige, Durchgangsöffnung 62 aufweisen. Die Durchgangsöffnung 62 kann einen Verschiebeweg eines Fahrersitzes (nicht dargestellt) im Fahrerhaus 12 nach hinten durch Bereitstellen eines rückseitigen Verschieberaums verlängern. Beispielsweise kann eine am Fahrersitz befestigte Gurtrolle in die Durchgangsöffnung 62 eintauchen, wenn der Fahrersitz bis zum Endanschlag nach hinten verschoben wird. Es ist auch möglich, dass die geneigte Anlagefläche 46 des zweiten Tragbauteils 36 eine Durchgangsöffnung 64 zur Gewichtseinsparung aufweist.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die Merkmale des unabhängigen Anspruchs 1 unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Hauptrahmens, der Fahrerkabine und/oder der Fahrerhaustragvorrichtung des unabhängigen Anspruchs 1 offenbart.

### Bezugszeichenliste

- 10: Hauptrahmen
- 12: Fahrerhaus
- 14: Fahrerhaustragvorrichtung
- 16: Erster Hauptlängsträger
- 18: Zweiter Hauptlängsträger
- 20: Vorderwandstruktur
- 22: Bodenstruktur
- 24: Rückwandstruktur
- 26: Seitenwandstruktur
- 28: Dachstruktur
- 30: Stufe
- 32: Stufe
- 34: (Erstes) Tragbauteil
- 36: (Zweites) Tragbauteil
- 38: (Drittes) Tragbauteil
- 40-52: Anlageflächen
- 54: Zentrierelement
- 56: Zentrierelementaufnahme
- 58, 60: Befestigungselementaufnahmen
- 62: Durchgangsöffnung
- 64: Durchgangsöffnung

## Patentansprüche

1. Kraftfahrzeug, vorzugsweise Nutzfahrzeug, vorzugsweise Lastkraftwagen, aufweisend:
ein Fahrerhaus (12);
einen Hauptrahmen (10); und
eine starre Fahrerhaustragvorrichtung (14), die das Fahrerhaus (12) starr an einer Rückseite des Fahrerhauses (12) trägt und starr von dem Hauptrahmen (10) getragen ist, **dadurch gekennzeichnet, dass**
die starre Fahrerhaustragvorrichtung (14) und das Fahrerhaus (12) so ausgebildet sind, dass das Fahrerhaus (12) und die starre Fahrerhaustragvorrichtung (14) bereits durch eine Zentrierung und mehrere flächige Kontakte zwischen der starren Fahrerhaustragvorrichtung (14) und dem Fahrerhaus (12) bezüglich zweier translatorischer Freiheitsgrade und bezüglich aller drei rotatorischen Freiheitsgrade zueinander festgelegt sind.

2. Kraftfahrzeug nach Anspruch 1, wobei:
die starre Fahrerhaustragvorrichtung (14) mindestens eine Anlagefläche (44, 46) aufweist, die zu einer Horizontalachse und zu einer Vertikalachse geneigt ist und flächig an der Rückseite des Fahrerhauses (12) anliegt.

3. Kraftfahrzeug nach Anspruch 1 oder Anspruch 2, wobei:
die Rückseite des Fahrerhauses (12) mit einer Stufe (30) ausgebildet ist, die bezüglich einer Vertikalrichtung und bezüglich einer Horizontalrichtung, vorzugsweise flächig, an der starren Fahrerhaustragvorrichtung (14) anliegt; und/oder
die starre Fahrerhaustragvorrichtung (14) mit einer Stufe (32) ausgebildet ist, die bezüglich einer Vertikalrichtung und bezüglich einer Horizontalrichtung, vorzugsweise flächig, an der Rückseite des Fahrerhauses (12) anliegt.

4. Kraftfahrzeug nach Anspruch 3, wobei:
eine sich in Vertikalrichtung erstreckende Stufenfläche der Stufe (30, 32) des Fahrerhauses (12) und/oder der Fahrerhaustragvorrichtung (14) geneigt zu einer Vertikalachse ist.

5. Kraftfahrzeug nach einem der vorherigen Ansprüche, wobei:
eines von der starren Fahrerhaustragvorrichtung (14) und dem Fahrerhaus (12) ein Zentrierelement (54) und das andere von der starren Fahrerhaustragvorrichtung (14) und dem Fahrerhaus (12) eine Zentrierelementaufnahme (56) für das Zentrierelement (54) aufweist.

6. Kraftfahrzeug nach Anspruch 5, wobei:
das Zentrierelement (54) konisch und oder als ein Zentrierdorn ausgebildet ist; und/oder
die Zentrierelementaufnahme (56) als ein Loch, vorzugsweise ein Durchgangsloch ausgebildet ist; und/oder
das Zentrierelement (54) in einer Vertikalrichtung ausgerichtet ist; und/oder
das Zentrierelement (54) und die Zentrierelementaufnahme (56) das Fahrerhaus (12) und die starre Fahrerhaustragvorrichtung (14) in einer Längsrichtung des Kraftfahrzeugs und in einer Querrichtung des Kraftfahrzeugs zueinander ausrichten.

7. Kraftfahrzeug nach einem der vorherigen Ansprüche, wobei:
die starre Fahrerhaustragvorrichtung (14) als eine Tragkonsolenvorrichtung ausgebildet ist; und/oder
die starre Fahrerhaustragvorrichtung (14) mehrteilig, vorzugsweise dreiteilig, ist; und/oder
die starre Fahrerhaustragvorrichtung (14) über mehrere lösbare Befestigungselemente an dem Fahrerhaus (12) befestigt ist, die so angeordnet sind, dass mehr als die Hälfte, vorzugsweise mehr als 70 % der lösbaren Befestigungselemente von außerhalb des Fahrerhauses (12) zugängig sind; und/oder
das Fahrerhaus (12) das Kraftfahrzeug nach unten hin begrenzt.

8. Kraftfahrzeug nach einem der vorherigen Ansprüche, wobei:
ein erstes Tragbauteil (34) der starren Fahrerhaustragvorrichtung (14) an einem fahrerseitigen Rückseitenbereich der Rückseite des Fahrerhauses (12) befestigt ist; und/oder
ein zweites Tragbauteil (36) der starren Fahrerhaustragvorrichtung (14) an einem beifahrerseitigen Rückseitenbereich der Rückseite des Fahrerhauses (12) befestigt ist; und/oder
ein drittes Tragbauteil (38) der starren Fahrerhaustragvorrichtung (14) an einer Rückseite einer Bodenstruktur (22) des Fahrerhauses (12) befestigt ist.

9. Kraftfahrzeug nach Anspruch 8, wobei:
das erste Tragbauteil (34) an einem ersten Längsträger (16) des Hauptrahmens (10) befestigt ist; und/oder
das zweite Tragbauteil (36) an einem zweiten Längsträger (18) des Hauptrahmens (10) befestigt ist; und/oder
das dritte Tragbauteil (38) zwischen dem ersten Tragbauteil (34) und dem zweiten Tragbauteil (36) angeordnet ist; und/oder
das dritte Tragbauteil (36) als eine Querträgerkonstruktion ausgeführt ist; und/oder
das dritte Tragbauteil (36) von dem ersten Tragbauteil (34) und dem zweiten Tragbauteil (36) getragen ist; und/oder
das erste Tragbauteil (34), das zweite Tragbauteil (36) und/oder das dritte Tragbauteil (38) als eine Tragkonsole ausgebildet ist.

10. Kraftfahrzeug nach Anspruch 8 oder Anspruch 9, wobei:
das erste Tragbauteil (34) eine horizontale Anlagefläche (40) in flächiger Anlage mit dem Fahrerhaus (12), eine zu einer Horizontalachse und zu einer Vertikalachse geneigte Anlagefläche (44) in flächiger Anlage mit dem Fahrerhaus (12) und/oder eine vertikale Anlagefläche (48) in flächiger Anlage mit dem Fahrerhaus (12) aufweist; und/oder
das zweite Tragbauteil (36) eine horizontale Anlagefläche (42) in flächiger Anlage mit dem Fahrerhaus (12), eine zu einer Horizontalachse und zu einer Vertikalachse geneigte Anlagefläche (46) in flächiger Anlage mit dem Fahrerhaus (12) und/oder eine vertikale Anlagefläche (50) in flächiger Anlage mit dem Fahrerhaus (12) aufweist; und/oder
das dritte Tragbauteil (38) eine vertikale Anlagefläche (52) in flächiger Anlage mit dem Fahrerhaus (12) aufweist.

11. Kraftfahrzeug nach einem der Ansprüche 8 bis 10, wobei:
das erste Tragbauteil (34) oder das zweite Tragbauteil (36) ein, vorzugsweise konisches, Zentrierelement (54), vorzugsweise einen Zentrierdorn, zum Ausrichten des Fahrerhauses (12) aufweist, und
das Zentrierelement (54) sich ausgehend von der horizontalen Anlagefläche des ersten Tragbauteils (34) oder des zweiten Tragbauteils (36) in einer Vertikalrichtung nach oben erstreckt.

12. Kraftfahrzeug nach Anspruch 10 oder Anspruch 11, wobei:
die zur Horizontalachse und zur Vertikalachse geneigte Anlagefläche (44) des ersten Tragbauteils (34) eine, vorzugsweise rechteckförmige, Durchgangsöffnung (62) zum Bereitstellen eines rückseitigen Verschieberaums für einen verschiebbaren Fahrersitz des Fahrerhauses (12) aufweist; und/oder
die zur Horizontalachse und zur Vertikalachse geneigte Anlagefläche (46) des zweiten Tragbauteils (36) eine Durchgangsöffnung (64) zur Gewichtseinsparung aufweist.

13. Verfahren zur Montage eines Kraftfahrzeugs nach einem der vorherigen Ansprüche, aufweisend:
Vormontieren des Fahrerhauses (12);
Montieren der starren Fahrerhaustragvorrichtung (14) am Hauptrahmen (10); und
Absenken des vormontierten Fahrerhauses (12) auf die am Hauptrahmen (10) montierte starre Fahrerhaustragvorrichtung (14).

14. Verfahren nach Anspruch 13, wobei
beim Absenken eine sukzessive Ausrichtung des Fahrerhauses (12) zur Fahrerhaustragvorrichtung (14) in einer Längsrichtung des Kraftfahrzeugs und in einer Querrichtung des Kraftfahrzeugs mittels des Zentrierelements (54) erfolgt, während das Fahrerhaus (12) an der zur Horizontalachse und zur Vertikalachse geneigten Anlagefläche (44) des ersten Tragbauteils (34) und/oder an der zur Horizontalachse und zur Vertikalachse geneigten Anlagefläche (46) des zweiten Tragbauteils (36) entlanggleitet.

## Claims

1. A motor vehicle, preferably a utility vehicle, preferably a lorry, having:
a driver's cab (12);
a main frame (10); and
a rigid driver's cab supporting apparatus (14) which supports the driver's cab (12) rigidly on a rear side of the driver's cab (12) and is supported rigidly by the main frame (10),
**characterized in that**
the rigid driver's cab supporting apparatus (14) and the driver's cab (12) are configured in such a way that the driver's cab (12) and the rigid driver's cab supporting apparatus (14) are already fixed, with regard to two translational degrees of freedom and with regard to all three rotational degrees of freedom, with respect to one another by way of a centring means and a plurality of full-area contacts between the rigid driver's cab supporting apparatus (14) and the driver's cab (12).

2. The motor vehicle according to Claim 1:
the rigid driver's cab supporting apparatus (14) having at least one bearing face (44, 46) which is inclined with respect to a horizontal axis and with respect to a vertical axis and bears over the full area against the rear side of the driver's cab (12).

3. The motor vehicle according to Claim 1 or Claim 2:
the rear side of the driver's cab (12) being configured with a step (30) which bears, preferably over the full area, against the rigid driver's cab supporting apparatus (14) with regard to a vertical direction and with regard to a horizontal direction; and/or
the rigid driver's cab supporting apparatus (14) being configured with a step (32) which bears, preferably over the full area, against the rear side of the driver's cab (12) with regard to a vertical direction and with regard to a horizontal direction.

4. The motor vehicle according to Claim 3:
a step face, extending in the vertical direction, of the step (30, 32) of the driver's cab (12) and/or the driver's cab supporting apparatus (14) being inclined with respect to a vertical axis.

5. The motor vehicle according to one of the preceding claims:
one of the rigid driver's cab supporting apparatus (14) and the driver's cab (12) having a centring element (54), and the other one of the rigid driver's cab supporting apparatus (14) and the driver's cab (12) having a centring element receptacle (56) for the centring element (54).

6. The motor vehicle according to Claim 5:
the centring element (54) being configured to be conical or as a centring pin; and/or
the centring element receptacle (56) being configured as a hole, preferably a through hole; and/or
the centring element (54) being oriented in a vertical direction; and/or
the centring element (54) and the centring element receptacle (56) orienting the driver's cab (12) and the rigid driver's cab supporting apparatus (14) with respect to one another in a longitudinal direction of the motor vehicle and in a transverse direction of the motor vehicle.

7. The motor vehicle according to one of the preceding claims:
the rigid driver's cab supporting apparatus (14) being configured as a supporting bracket apparatus; and/or
the rigid driver's cab supporting apparatus (14) being in multiple pieces, preferably in three pieces; and/or
the rigid driver's cab supporting apparatus (14) being fastened to the driver's cab (12) via a plurality of releasable fastening elements which are arranged in such a way that more than half, preferably more than 70% of the releasable fastening elements are accessible from outside the driver's cab (12); and/or
the driver's cab (12) delimiting the motor vehicle towards the bottom.

8. The motor vehicle according to one of the preceding claims:
a first supporting component (34) of the rigid driver's cab supporting apparatus (14) being fastened to a driver-side rear side region of the rear side of the driver's cab (12); and/or
a second supporting component (36) of the rigid driver's cab supporting apparatus (14) being fastened to a passenger-side rear side region of the rear side of the driver's cab (12); and/or
a third supporting component (38) of the rigid driver's cab supporting apparatus (14) being fastened to a rear side of a floor structure (22) of the driver's cab (12) .

9. The motor vehicle according to Claim 8:
the first supporting component (34) being fastened to a first longitudinal beam (16) of the main frame (10); and/or
the second supporting component (36) being fastened to a second longitudinal beam (18) of the main frame (10); and/or
the third supporting component (38) being arranged between the first supporting component (34) and the second supporting component (36); and/or
the third supporting component (36) being configured as a crossmember construction; and/or
the third supporting component (36) being supported by the first supporting component (34) and the second supporting component (36); and/or
the first supporting component (34), the second supporting component (36) and/or the third supporting component (38) being configured as a supporting bracket.

10. The motor vehicle according to Claim 8 or Claim 9:
the first supporting component (34) having a horizontal bearing face (40) in full-area contact with the driver's cab (12), a bearing face (44), inclined with respect to a horizontal axis and with respect to a vertical axis, in full-area contact with the driver's cab (12), and/or a vertical bearing face (48) in full-area contact with the driver's cab (12); and/or
the second supporting component (36) having a horizontal bearing face (42) in full-area contact with the driver's cab (12), a bearing face (46), inclined with respect to a horizontal axis and with respect to a vertical axis, in full-area contact with the driver's cab (12), and/or a vertical bearing face (50) in full-area contact with the driver's cab (12); and/or
the third supporting component (38) having a vertical bearing face (52) in full-area contact with the driver's cab (12).

11. The motor vehicle according to one of Claims 8 to 10:
the first supporting component (34) or the second supporting component (36) having a centring element (54) which is preferably conical, preferably a centring pin, for orienting the driver's cab (12), and
the centring element (54) extending in a vertical direction upwards starting from the horizontal bearing face of the first supporting component (34) or the second supporting component (36).

12. The motor vehicle according to Claim 10 or Claim 11:
the bearing face (44), inclined with respect to the horizontal axis and with respect to the vertical axis, of the first supporting component (34) having a through opening (62) which is preferably rectangular for providing a rear-side displacement space for a displaceable driver's seat of the driver's cab (12); and/or
the bearing face (46), inclined with respect to the horizontal axis or with respect to the vertical axis, of the second supporting component (36) having a through opening (64) to save weight.

13. A method for assembling a motor vehicle according to one of the preceding claims, comprising:
pre-assembly of the driver's cab (12);
mounting of the rigid driver's cab supporting apparatus (14) on the main frame (10); and
lowering of the pre-assembled driver's cab (12) onto the rigid driver's cab supporting apparatus (14) which is mounted on the main frame (10).

14. The method according to Claim 13,
a successive orientation of the driver's cab (12) with respect to the driver's cab supporting apparatus (14) in a longitudinal direction of the motor vehicle and in a transverse direction of the motor vehicle by means of the centring element (54) during lowering, while the driver's cab (12) slides along on the bearing face (44), inclined with respect to the horizontal axis and with respect to the vertical axis, of the first supporting component (34) and/or on the bearing face (46), inclined with respect to the horizontal axis and with respect to the vertical axis, of the second supporting component (36) .

## Revendications

1. Véhicule automobile, de préférence véhicule utilitaire, de préférence camion, comprenant :
une cabine (12) ;
un châssis principal (10) ; et
un dispositif de support de cabine rigide (14), qui supporte de manière rigide la cabine (12) sur un côté arrière de la cabine (12) et qui est supporté de manière rigide par le châssis principal (10), **caractérisé en ce que**
le dispositif de support de cabine rigide (14) et la cabine (12) sont configurés de telle sorte que la cabine (12) et le dispositif de support de cabine rigide (14) sont déjà immobilisés l'un par rapport à l'autre par un centrage et plusieurs contacts plats entre le dispositif de support de cabine rigide (14) et la cabine (12) au regard de deux degrés de liberté en translation et au regard de tous les trois degrés de liberté en rotation.

2. Véhicule automobile selon la revendication 1, dans lequel :
le dispositif de support de cabine rigide (14) présente au moins une surface d'application (44, 46), qui est inclinée par rapport à un axe horizontal et par rapport à un axe vertical et qui s'applique à plat sur le côté arrière de la cabine (12).

3. Véhicule automobile selon la revendication 1 ou la revendication 2, dans lequel :
le côté arrière de la cabine (12) est configuré avec un gradin (30), qui s'applique sur le dispositif de support de cabine rigide (14) au regard d'une direction verticale et au regard d'une direction horizontale, de préférence à plat ; et/ou
le dispositif de support de cabine rigide (14) est configuré avec un gradin (32), qui s'applique sur le côté arrière de la cabine (12) au regard d'une direction verticale et au regard d'une direction horizontale, de préférence à plat.

4. Véhicule automobile selon la revendication 3, dans lequel :
une surface de gradin s'étendant dans la direction verticale du gradin (30, 32) de la cabine (12) et/ou du dispositif de support de cabine (14) est inclinée par rapport à un axe vertical.

5. Véhicule automobile selon l'une quelconque des revendications précédentes, dans lequel :
l'un parmi le dispositif de support de cabine rigide (14) et la cabine (12) présente un élément de centrage (54) et l'autre parmi le dispositif de support de cabine rigide (14) et la cabine (12) présente un logement d'élément de centrage (56) pour l'élément de centrage (54).

6. Véhicule automobile selon la revendication 5, dans lequel :
l'élément de centrage (54) est configuré sous forme conique ou sous la forme d'un mandrin de centrage ; et/ou
le logement d'élément de centrage (56) est configuré sous la forme d'un trou, de préférence d'un trou traversant ; et/ou
l'élément de centrage (54) est orienté dans une direction verticale ; et/ou
l'élément de centrage (54) et le logement d'élément de centrage (56) orientent la cabine (12) et le dispositif de support de cabine rigide (14) l'un par rapport à l'autre dans une direction longitudinale du véhicule automobile et dans une direction transversale du véhicule automobile.

7. Véhicule automobile selon l'une quelconque des revendications précédentes, dans lequel :
le dispositif de support de cabine rigide (14) est configuré sous la forme d'un dispositif de console de support ; et/ou
le dispositif de support de cabine rigide (14) est en plusieurs parties, de préférence en trois parties ; et/ou
le dispositif de support de cabine rigide (14) est fixé à la cabine (12) par l'intermédiaire de plusieurs éléments de fixation amovibles, qui sont agencés de telle sorte que plus de la moitié, de préférence plus de 70 %, des éléments de fixation amovibles sont accessibles de l'extérieur de la cabine (12) ; et/ou
la cabine (12) délimite le véhicule automobile vers le bas.

8. Véhicule automobile selon l'une quelconque des revendications précédentes, dans lequel :
un premier composant de support (34) du dispositif de support de cabine rigide (14) est fixé à une zone de côté arrière côté conducteur du côté arrière de la cabine (12) ; et/ou
un deuxième composant de support (36) du dispositif de support de cabine rigide (14) est fixé à une zone de côté arrière côté passager du côté arrière de la cabine (12) ; et/ou
un troisième composant de support (38) du dispositif de support de cabine rigide (14) est fixé à un côté arrière d'une structure de plancher (22) de la cabine (12).

9. Véhicule automobile selon la revendication 8, dans lequel :
le premier composant de support (34) est fixé à un premier longeron (16) du châssis principal (10) ; et/ou
le deuxième composant de support (36) est fixé à un deuxième longeron (18) du châssis principal (10) ; et/ou
le troisième composant de support (38) est agencé entre le premier composant de support (34) et le deuxième composant de support (36) ; et/ou
le troisième composant de support (36) est réalisé sous la forme d'une construction de traverse ; et/ou
le troisième composant de support (36) est supporté par le premier composant de support (34) et le deuxième composant de support (36) ; et/ou
le premier composant de support (34), le deuxième composant de support (36) et/ou le troisième composant de support (38) sont configurés sous la forme d'une console de support.

10. Véhicule automobile selon la revendication 8 ou la revendication 9, dans lequel :
le premier composant de support (34) présente une surface d'application horizontale (40) en application à plat avec la cabine (12), une surface d'application (44) inclinée par rapport à un axe horizontal et par rapport à un axe vertical en application à plat avec la cabine (12) et/ou une surface d'application verticale (48) en application à plat avec la cabine (12) ; et/ou
le deuxième composant de support (36) présente une surface d'application horizontale (42) en application à plat avec la cabine (12), une surface d'application (46) inclinée par rapport à un axe horizontal et par rapport à un axe vertical en application à plat avec la cabine (12) et/ou une surface d'application verticale (50) en application à plat avec la cabine (12) ; et/ou
le troisième composant de support (38) présente une surface d'application verticale (52) en application à plat avec la cabine (12).

11. Véhicule automobile selon l'une quelconque des revendications 8 à 10, dans lequel :
le premier composant de support (34) ou le deuxième composant de support (36) présente un élément de centrage (54), de préférence conique, de préférence un mandrin de centrage, pour orienter la cabine (12), et
l'élément de centrage (54) s'étend vers le haut dans une direction verticale à partir de la surface d'application horizontale du premier composant de support (34) ou du deuxième composant de support (36).

12. Véhicule automobile selon la revendication 10 ou la revendication 11, dans lequel :
la surface d'application (44) du premier composant de support (34), inclinée par rapport à l'axe horizontal et par rapport à l'axe vertical, présente une ouverture de passage (62), de préférence rectangulaire, pour fournir un espace de coulissement arrière pour un siège de conducteur coulissant de la cabine (12) ; et/ou
la surface d'application (46) du deuxième composant de support (36), inclinée par rapport à l'axe horizontal et par rapport à l'axe vertical, présente une ouverture de passage (64) pour réduire le poids.

13. Procédé de montage d'un véhicule automobile selon l'une quelconque des revendications précédentes, comprenant :
le prémontage de la cabine (12) ;
le montage du dispositif de support de cabine rigide (14) sur le châssis principal (10) ; et
l'abaissement de la cabine prémontée (12) sur le dispositif de support de cabine rigide (14) monté sur le châssis principal (10).

14. Procédé selon la revendication 13, dans lequel
lors de l'abaissement, une orientation successive de la cabine (12) par rapport au dispositif de support de cabine (14) est effectuée dans une direction longitudinale du véhicule automobile et dans une direction transversale du véhicule automobile au moyen de l'élément de centrage (54), pendant que la cabine (12) glisse le long de la surface d'application (44) du premier composant de support (34), inclinée par rapport à l'axe horizontal et par rapport à l'axe vertical, et/ou le long de la surface d'application (46) du deuxième composant de support (36), inclinée par rapport à l'axe horizontal et par rapport à l'axe vertical.
